(19) **Europäisches Patentamt / European Patent Office / Office européen des brevets**

(11) **EP 3 191 540 B1**

(12) **FASCICULE DE BREVET EUROPEEN**

(45) Date de publication et mention
de la délivrance du brevet:
**27.06.2018 Bulletin 2018/26**

(21) Numéro de dépôt: **15770569.0**

(22) Date de dépôt: **10.09.2015**

(51) Int Cl.:
***C08G 63/12*** *(2006.01)*  ***C08G 63/16*** *(2006.01)*
***C08G 63/668*** *(2006.01)*  ***C08G 63/672*** *(2006.01)*
***C08G 63/66*** *(2006.01)*

(86) Numéro de dépôt international:
**PCT/FR2015/052408**

(87) Numéro de publication internationale:
**WO 2016/038303 (17.03.2016 Gazette 2016/11)**

(54) **PROCÉDÉ SPÉCIFIQUE DE PRÉPARATION DE POLYESTERS BIOSOURCES**

SPEZIFISCHES VERFAHREN ZUR HERSTELLUNG VON BIOBASIERTEN POLYESTERN

SPECIFIC METHOD FOR PREPARING BIOBASED POLYESTERS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.09.2014 FR 1458600**

(43) Date de publication de la demande:
**19.07.2017 Bulletin 2017/29**

(73) Titulaire: **Arkema France
92700 Colombes (FR)**

(72) Inventeurs:
• **COGORDAN, Frank
F-75019 Paris (FR)**
• **OZERAY, Hervé
F-60190 Estrees Saint Denis (FR)**
• **RIONDEL, Alain
F-77178 Saint Pathus (FR)**

(74) Mandataire: **Killis, Andréas
ARKEMA France
Département Propriété Industrielle
420, rue d'Estienne d'Orves
92705 Colombes Cedex (FR)**

(56) Documents cités:
**EP-A1- 2 325 229    EP-A1- 2 623 538
US-A1- 2002 115 817    US-A1- 2013 197 152**

**Description**

L'invention concerne un procédé de préparation d'une résine polyester de structure linéaire ou ramifiée et exempte d'acides gras insaturés, laquelle est hydroxylée ou carboxylée à base de matières premières renouvelables, en particulier au moins à base d'un polyol biosourcé spécifique.

Les résines polyesters fonctionnalisées sans huile sont bien connues pour les applications de revêtements pour feuilles métalliques connus sous le terme anglais « coils ».

Des résines polyesters polyols à base de composants d'origine renouvelable dits également « biosourcés » pour application dans les revêtements de feuilles métalliques sont déjà décrits dans WO 2012/042153 et en particulier des résines sans huile. Ces résines polyesters sont à base de colophane. Cependant, comme telles, elles ont besoin d'amélioration en termes de durabilité et de résistance au jaunissement.

B. A. Noordover et al décrit dans J. Biomacromolecules, 2006, 7, 3406-3416 des co- et terpolyesters basés sur l'isosorbide et l'acide succinique et d'autres monomères d'origine renouvelable comme le 2,3 butanediol ou le 1,3 propanediol ou l'acide citrique.

Aucune présence de polyacides de chaîne plus longue en au moins $C_8$ n'est mentionnée ou suggérée dans ces documents.

La présente invention cherche à mettre au point par un procédé spécifique, des nouvelles résines polyesters hydroxylées ou carboxylées, sans huile et exemptes de tout résidu d'acide gras insaturé ayant une durabilité et résistance au jaunissement et un compromis dureté/flexibilité améliorées tout en ayant une bonne résistance chimique, en particulier aux solvants organiques et à l'eau, concernant le revêtement obtenu, en particulier pour application sur feuilles de métal.

L'objet de la présente invention concerne un procédé de préparation d'une résine de polyester linéaire ou ramifié qui est hydroxylé et/ou carboxylé à base d'une composition spécifique avec des matières premières renouvelables et en particulier à base d'un polyol biosourcé spécifique. Plus précisément, l'objet de l'invention concerne un procédé de préparation d'une résine polyester hydroxylée ou carboxylée, éventuellement hydroxylée et carboxylée, linéaire ou ramifiée, exempte d'acide gras insaturé, ledit procédé comprenant la réaction entre un composant acide a) et un composant alcool b), avec ledit composant acide a) comprenant :

a1) au moins un polyacide ou anhydride carboxylique en $C_4$ à $C_6$, de préférence de fonctionnalité $f_{a1}$ allant de 2 à 4 et plus préférentiellement égale à 2,

a2) au moins un polyacide ou anhydride carboxylique en $C_8$ à $C_{54}$, de préférence de fonctionnalité $f_{a2}$ allant de 2 à 4 et plus préférentiellement égale à 2 et

a3) en option, au moins un monoacide saturé en $C_2$ à $C_{22}$, éventuellement pouvant porter un groupement hydroxyle, et

avec ledit composant alcool b) comprenant :

b1) au moins un polyol biosourcé de fonctionnalité $f_{b1}$ d'au moins 2, de préférence 2, porteur d'un motif 1,4:3,6 dianhydrohexitol,

et au moins un des deux polyols b2) et b3) suivants :

b2) au moins un polyol différent de b1) de fonctionnalité $f_{b2}$ d'au moins 2, de préférence 2, plus particulièrement en $C_3$ à $C_{36}$

b3) au moins un polyol différent de b1) et de b2) de fonctionnalité $f_{b3}$ d'au moins 3, de préférence 3,

avec ladite réaction ayant lieu selon les étapes successives suivantes :

i) réaction de l'ensemble du composant acide a) avec ledit composant b1) dudit composant alcool b) et jusqu'à une conversion d'au moins 85 %, de préférence de 100 % dudit composant b1), suivie de

ii) réaction du produit issu de l'étape i) avec le reste dudit composant alcool b), comprenant au moins un desdits polyols b2) ou b3),

les réactions desdites étapes i) et ii) ayant lieu en solution dans au moins un solvant organique pouvant former un azéotrope avec l'eau.

Selon une option particulière, les deux polyols b2) et b3) comme définis ci-haut sont présents dans ledit composant b).

Ledit solvant selon ce procédé permet à la fois l'effet d'azéotrope et l'élimination de l'eau de la réaction, en particulier de ladite étape i) et également la solubilisation des composants réactifs, en particulier de l'étape i).

Ledit solvant organique peut en particulier être sélectionné parmi : cétones, en particulier méthyl amyl cétone, méthyl isobutyl cétone, 2-heptanone, 2-octanone et plus particulièrement méthyl amyl cétone, méthyl isobutyl cétone ou 2-heptanone, solvants aromatiques, en particulier le xylène ou toluène, solvants cycloaliphatiques, en particulier le cyclohexane ou les alcanes en au moins $C_7$ et de préférence cétones, en particulier méthyl amyl cétone, méthyl isobutyl cétone.

Plus particulièrement, ladite étape i) peut être réalisée en présence d'un catalyseur choisi parmi :

- dérivés d'étain, en particulier l'oxalate d'étain ou l'acide butyl stannoique ou l'oxyde d'étain (II)
- dérivés du titane, en particulier les titanates d'alkyle comme le titanate d'éthyle, le titanate d'isopropyle, le titanate de butyle ou le titanate de 2-éthyl hexyle et plus particulièrement le titanate d'isopropyle ou le titanate de butyle.

Le taux en poids dudit catalyseur par rapport au poids de l'ensemble des réactants de l'étape i) (a)+ b1)) peut en particulier varier de 0,01 à 0,5 % et de préférence de 0,01 à 0,25 %.

L'étape i) dudit procédé peut être réalisée à une température allant de 150 à 220°C et de préférence de 175 à 220°C.

Concernant ladite étape ii), elle peut être réalisée à une température allant de 180 à 250°C et de préférence de 190 à 220°C.

Une résine ou un produit biosourcé signifie qu'il comprend une matière première d'origine non fossile qui est renouvelable et d'origine végétale ou animale.

La caractéristique de « biosourcé » d'un produit ou résine ou d'une matière première utilisée comme composant dudit produit, telle qu'un polyacide, un polyol ou un acide gras peut être déterminée par détermination du taux de carbone $^{14}$C, lequel atteste l'origine renouvelable du carbone dudit composant comme tel ou incorporé dans un produit final après réaction (qui ne modifie en rien ce taux). En effet, un composant biosourcé est un composant dans lequel le carbone provient du dioxyde de carbone ($CO_2$) fixé par photosynthèse à partir de l'atmosphère terrestre. La teneur fixe spécifique en carbone $^{14}$C est la signature d'un composant biosourcé qui se différencie de celui correspondant à un composant d'origine fossile. Cette teneur peut être déterminée selon ASTM D 6866 (ASTM D 6866-06) ou ASTM D 7026 (ASTM D 7026-04), en particulier par spectrométrie de masse selon ASTM D6866-06.

Concernant la résine préparée par ledit procédé, une fraction en poids d'au moins 50 %, de préférence d'au moins 75 % dudit polyol b) est biosourcée.

Plus particulièrement, ledit composant b1) biosourcé est choisi parmi : l'isosorbide (1,4:3,6 dianhydro-D-sorbitol), l'isomannide (1,4:3,6 dianhydro-D-mannitol) ou l'isoidide (1,4:3,6 dianhydro-L-iditol).

Selon une option plus particulière, au moins 50 %, de préférence au moins 75 % en poids par rapport au poids global desdits composants a) + b) est biosourcé.

Plus particulièrement encore, les composants a) et b) sont à 100 % biosourcés.

Selon une autre option particulière, ledit polyol b2) est biosourcé et choisi parmi le 1,3 propylène diol ou le 1,2 propylène diol, le 1,4 butane diol ou les diols à base (signifiant dérivés) d'acides gras saturés. De tels diols peuvent avoir une chaîne en $C_{12}$ à $C_{36}$.

Encore plus particulièrement, ledit polyol b3) peut être biosourcé et choisi parmi le glycérol et ses dérivés éther-polyols, tels que les polyglycérols qui sont des dérivés oligomères du glycérol.

Ledit polyacide a1) inclut dans sa couverture des acides comme l'acide aconitique issu de la canne à sucre en $C_6$ et de fonctionnalité $f_{a1} = 3$. Le polyacide a1) peut aussi porter un groupement parmi hydroxyle comme l'acide citrique avec $f_{a1} = 3$ et porteur en plus d'une fonction hydroxyle ou malique avec $f_{a1} = 2$ et porteur d'un hydroxyle ou l'acide glutamique avec $f_{a1} = 2$ et porteur d'un groupement amine.

Concernant ledit polyacide a1) selon un choix particulier, il est un diacide aliphatique biosourcé choisi parmi : acide succinique, acide tartrique, acide citrique, acide malique, acide itaconique, acide glutarique, acide glutamique, acide fumarique, acide furanne dicarboxylique, acide tetrahydrofuranne 2,5 dicarboxylique ou acide tetrahydrofuranne 3,5 dicarboxylique, de préférence acide succinique, acide itaconique, acide glutamique, acide fumarique, acide furane dicarboxylique ou acide tetrahydrofuranne 2,5 dicarboxylique ou acide tetrahydrofuranne 3,5 dicarboxylique.

Dans le cas où la fonctionnalité d'un des composants cités est supérieure à 2, de préférence la fonctionnalité moyenne en nombre du mélange des composants a) + b) ne dépasse pas 2. Ledit polyester est donc de structure linéaire ou ramifiée et par définition il ne peut comporter de structure réticulée, laquelle est ainsi par définition exclue. L'homme du métier sait en particulier choisir les proportions et les fonctionnalités de composants réactifs ainsi que le taux de conversion des fonctions réactives afin d'éviter toute réticulation ou gélification chimique du système réactif. Cette question ne peut se poser que quand l'un des composants réactifs (a) et (b) est de fonctionnalité moyenne supérieure à 2 pour obtenir une structure ramifiée. Il est possible de contrôler la structure sans aucune réticulation possible, en ajustant les proportions des composants a) et b) de sorte que la fonctionnalité moyenne en nombre (par mole de composant réactant) sur l'ensemble des composants réactifs (a + b) ne dépasse pas 2 ou si elle dépasse 2 de limiter le taux de conversion bien avant le point de gel (gélification) prédictible soit par l'expérimentation soit par le calcul selon la relation de Macosko-Miller et/ou par addition progressive du composant le moins fonctionnalisé sur le composant le plus fonctionnalisé sous agitation efficace (maintenu en excès de fonctions réactives par l'addition progressive du deuxième composant réactif). La relation de Macosko-Miller citée ci-haut est telle que définie selon Macromolecules, vol. 9, pages 199-211 (1976) et est considérée comme bien connue de l'homme du métier. Pour plus de clarté, nous rappelons ci-dessous cette relation qui relie le rapport critique $r_c$ des fonctions réactives pour deux composants réactifs A et B au point de gel, $r_c$ = fonctions de A/fonctions B, avec la fonctionnalité moyenne de A qui est $f_A$, et celle de B qui est $f_B$ avec le taux critique de conversion au point de gélification $x_g$ suivant :

$$r_c * x_g^2 = 1 / [(f_B - 1)*(f_A - 1)]$$

Ledit polyacide a2) peut également être biosourcé et choisi parmi : l'acide azélaïque ($C_9$), acide sébacique ($C_{10}$), acide undécane dioïque, acide dodécane dioïque ou dimères et trimères d'acides gras respectivement en $C_{36}$ et $C_{54}$. La présence de ce diacide a2) et sa proportion par rapport à a1) sont des facteurs importants pour jouer sur le compromis dureté/flexibilité du revêtement final et ajuster le rapport dureté/flexibilité, l'augmentation du taux de a2) améliore la flexibilité. Inversement, la dureté du revêtement augmente avec le taux de a1).

De préférence, le rapport molaire a1) / a2) varie de 2 à 8 et plus préférentiellement de 3 à 7.

Concernant ledit monoacide a3), il peut être sélectionné parmi : acide acétique, pyruvique, lactique ou la colophane (acide abiétique et isomères en $C_{20}$) ou un acide gras saturé en $C_{12}$ à $C_{22}$.

Ledit polyol biosourcé b1) peut en particulier représenter au moins 40 % mol/mol par rapport au composant b).

Selon un mode particulier et préféré de ladite résine, ledit polyol b1) représente au moins 30 % en poids de ladite résine, ce poids de « ladite résine » signifiant ici « par rapport au poids total des composants a) + b) utilisés pour ladite résine ».

Plus particulièrement, le taux du polyol b1) en % mol/mol sur l'ensemble du composant alcool b) varie de 40 à 80 et de préférence de 55 à 65.

Le taux correspondant au polyol b2) peut varier de 0 à 50 et de préférence de 25 à 35.

Le taux molaire du polyol b3) peut varier de 0 à 20 et de préférence de 5 à 15. Les taux de b1), b2) et b3) tels que donnés sont choisis dans les plages telles que définies en tenant compte également que la somme b1) + b2) + b3) soit égale à 100 %.

D'autre part, il est préféré que le rapport molaire entre les polyacides a1) et a2) varie de 2 à 8 et en particulier de 3 à 7.

Concernant la fonctionnalité OH ou carboxy, éventuellement OH et carboxy de ladite résine, elle peut correspondre à un indice de OH et/ou d'acide allant de 10 à 200 mg KOH/g.

Plus particulièrement, ladite résine peut avoir une fonctionnalité en acide carboxylique (carboxy) correspondant à un indice d'acide inférieur à 20, de préférence inférieur à 10 et plus préférentiellement inférieur à 5 et en particulier 0 mg KOH/g et une fonctionnalité en OH correspondant à un indice OH allant de 10 à 200, de préférence de 10 à 150, plus préférentiellement de 10 à 100 mg KOH/g. L'indice OH est déterminé selon ISO 2554. L'indice d'acide est déterminé selon ISO 2114.

La résine selon l'invention peut donc être fonctionnalisée OH ou carboxy ou OH et carboxy et de préférence dans ce dernier cas avec une fonctionnalité OH prédominante, c'est-à-dire avec plus de 90 % de groupements fonctionnels étant OH.

Concernant la masse moléculaire moyenne en nombre Mn de ladite résine, elle peut varier de 500 à 20000 et de préférence de 750 à 10000. Cette masse moléculaire Mn est déterminée par calcul à partir de l'indice de fonctionnalité (en mg KOH/g) et de la fonctionnalité moyenne $f_r$ de ladite résine qui représente le nombre moyen de fonctions OH et/ou acide carboxy, calculé à partir du bilan matière (proportions molaires) et de la fonctionnalité connue des composants a) et b) utilisés.

Lors de la première étape i), le rapport molaire des groupements carboxy ($CO_2H$) dudit composant a) par rapport aux groupements OH dudit polyol b1) peut varier de 1,1 à 2,1 et de préférence de 1,2 à 2, plus préférentiellement de 1,3 à 1,9.

Ce rapport $CO_2H$/OH est important pour la conversion élevée et jusqu'à totale dudit polyol b1), en particulier isosorbide.

En ce qui concerne ladite résine hydroxylée et/ou carboxylée, elle peut avoir un indice de fonctionnalité correspondant (OH ou acide carboxy) allant de 10 à 200 mg KOH/g.

La fonctionnalité est réglée en fonction de la nature du composant (a) ou b)) en excès global stœchiométrique par rapport à l'autre. Quand ce sont les groupements carboxy qui sont significativement en excès globalement et sur l'ensemble des composants a) + b), la fonctionnalité sera carboxy. Inversement, si ce sont les groupements OH qui sont ainsi en excès, la fonctionnalité de ladite résine sera OH.

Parmi les avantages du procédé de la présente invention, on peut citer : la conversion quasi-totale du polyol b1) sans coloration de la résine finale et avec un bon contrôle de la structure et de la fonctionnalité de ladite résine.

Les exemples suivants sont présentés à titre d'illustration de l'invention et de ses avantages et ne limitent nullement la portée de l'invention.

Partie Expérimentale

1) Matières premières utilisées

Tableau 1 : matières premières utilisées

| Nom commercial | Nom chimique | Fournisseur | Fonction technique | Nature fonction et fonctionnalité | Composant type selon invention |
|---|---|---|---|---|---|
| Polysorb® P | isosorbide | Roquette | Diol* | OH/2 | b1) |
| Oleris® Sebacic acid | Acide sébacique | Arkema | Diacide* | Carboxy/2 | a2) |
| BIO- SA® | Acide succinique | Bio Amber | Diacide* | Carboxy/2 | a1) |
| Glycerine® 4813 | Glycérol | Oleon | Triol* | OH/3 | b3) |
| Fascat® 4100 | acide butyl stannoique | PMC Organo Metallix | Catalyseur | - | catalyseur |
| MIBK | Méthyl isobutyl cétone | Arkema | Solvant azéo | - | Solvant azéo |
| MPA | Méthoxy propyl acétate | BASF | Solvant résine | - | Solvant résine |
| *biosourcé | | | | | |

2) Préparation de la résine (mode opératoire exemple 1)

Dans un réacteur de 3 litres, chauffé électriquement, équipé :

- d'une colonne à distiller du type Vigreux surmontée d'un séparateur Dean Stark,
- d'une canne plongeante pour introduire l'azote,
- d'une sonde de température,

on charge :

- 582 g d'isosorbide,
- 246,8 g d'acide sébacique,
- 380,9 g d'acide succinique,
- 0,13 g de Fascat® 4100 (acide butyl stannoique)

Sous débit d'azote, on chauffe jusqu'à 150°C et on introduit 50,62 g de méthyl isobutyl cétone (MIBK) comme (solvant) entraîneur azéotropique. On chauffe ensuite, jusqu'à 220°C tout en éliminant l'eau de la réaction sous forme d'hétéroazéotrope avec la MIBK jusqu'à atteindre un indice d'acide constant de 165 mg KOH/g correspondant à un taux de conversion de l'isosorbide de 99,5 %. La durée de cette première étape est de 8 h. On refroidit à 180°C et on introduit dans le réacteur 55,7 g de glycérol. Le milieu réactionnel est porté à 220°C toujours sous azote, jusqu'à obtenir un indice d'acide < 10 mg KOH/g. Le réacteur est refroidi à 150°C et on ajoute 617,57 g de méthoxy propyl acétate (MPA) en tant que solvant de dilution de la résine. A 90°C, le réacteur est vidangé et l'extrait sec est ajusté par ajout de 68,62 g de MPA.

Les caractéristiques finales du produit sont :

Coloration : 3 Gardner (méthode ISO 4630)

Extrait Sec : 60 % (méthode ISO 3251)

Viscosité Brookfield à 25°C (méthode ISO 3219) : 4350 mPa.s

Indice d'acide : 8 mg KOH/g (méthode ISO 2114)

Indice OH (fonctionnalité essentielle) (mg KOH/g) : 70 (méthode ISO 2554)

Isosorbide mesuré par analyse RMN du carbone 13 : 0,1 % dans la résine solvantée, ce qui correspond à un taux de conversion finale de l'isosorbide de 99,7 %.

Exemple 2

On reproduit l'exemple 1 en remplaçant la MIBK par le xylène.

La teneur en isosorbide dans le produit final est de 1 %, ce qui correspond à un taux de conversion de l'isosorbide de 96 %.

Exemple comparatif 1

On reproduit l'exemple 1 en chargeant tous les réactifs en une seule fois.

La teneur en isosorbide dans le produit final est de 5 %, ce qui correspond à un taux de conversion de l'isosorbide de 82 %.

Le procédé en 2 étapes selon l'invention permet de convertir quasi quantitativement l'isosorbide à un taux final d'au moins 96 %, de préférence d'au moins 99 %.

**Revendications**

**1.** Procédé de préparation d'une résine polyester hydroxylée ou carboxylée, éventuellement hydroxylée et carboxylée, linéaire ou ramifiée, exempte d'acide gras insaturé, ledit procédé étant **caractérisé en ce qu'**il comprend la réaction entre un composant acide a) et un composant alcool b), avec ledit composant acide a) comprenant :

a1) au moins un polyacide ou anhydride carboxylique en $C_4$ à $C_6$, de préférence de fonctionnalité $f_{a1}$ allant de 2 à 4 et plus préférentiellement égale à 2,

a2) au moins un polyacide ou anhydride carboxylique en $C_8$ à $C_{54}$, de préférence de fonctionnalité $f_{a2}$ allant de 2 à 4 et plus préférentiellement égale à 2 et

a3) en option, au moins un monoacide saturé en $C_2$ à $C_{22}$, et

avec ledit composant alcool b) comprenant :

b1) au moins un polyol biosourcé de fonctionnalité $f_{b1}$ d'au moins 2, de préférence 2, porteur d'un motif 1,4:3,6 dianhydrohexitol,

et au moins un des deux polyols b2 ou b3) suivants :

b2) au moins un polyol différent de b1) de fonctionnalité $f_{b2}$ d'au moins 2, de préférence 2, plus particulièrement en $C_3$ à $C_{36}$

b3) au moins un polyol différent de b1) et de b2) de fonctionnalité $f_{b3}$ d'au moins 3, de préférence 3

avec ladite réaction ayant lieu selon les étapes successives suivantes :

i) réaction de l'ensemble du composant acide a) avec ledit composant b1) dudit composant alcool b) jusqu'à une conversion d'au moins 85 %, de préférence 100 % dudit composant b1), suivie de

ii) réaction du produit issu de l'étape i) avec le reste dudit composant alcool b), comprenant au moins un desdits polyols b2) ou b3)

les réactions desdites étapes i) et ii) ayant lieu en solution dans au moins un solvant organique pouvant former un azéotrope avec l'eau.

**2.** Procédé selon la revendication 1, **caractérisé en ce que** ladite étape i) est réalisée en présence d'un catalyseur choisi parmi :

- dérivés d'étain, en particulier l'oxalate d'étain, l'acide butyl stannoïque ou l'oxyde d'étain (II)
- dérivés du titane, en particulier les titanates d'alkyle, comme le titanate d'éthyle, le titanate d'isopropyle, le titanate de butyle ou le titanate de 2-éthyl hexyle et plus particulièrement, le titanate d'isopropyle ou le titanate de butyle.

3. Procédé selon la revendication 2, **caractérisé en ce que** le taux en poids dudit catalyseur par rapport au poids de l'ensemble des réactants de l'étape i) (a)+ b1)) varie de 0,01 à 0,5 %.

4. Procédé selon l'une des revendications 1 à 3, **caractérisé en ce que** ladite étape i) est réalisée à une température allant de 150 à 220°C.

5. Procédé selon l'une des revendications 1 à 4, **caractérisé en ce que** ladite étape ii) est réalisée à une température allant de 180 à 250°C.

6. Procédé selon l'une des revendications 1 à 5, **caractérisé en ce que** ledit solvant organique est sélectionné parmi : cétones, en particulier méthyl amyl cétone, méthyl isobutyl cétone, 2-heptanone, 2-octanone et plus particulièrement, méthyl amyl cétone, méthyl isobutyl cétone ou 2-heptanone, solvants aromatiques, en particulier le xylène ou toluène, solvants cycloaliphatiques, en particulier le cyclohexane ou les alcanes en au moins $C_7$ et de préférence les cétones, en particulier méthyl amyl cétone, méthyl isobutyl cétone.

7. Procédé selon l'une des revendications 1 à 6, **caractérisé en ce qu'**une fraction en poids d'au moins 50%, de préférence d'au moins 75 % dudit polyol b) est biosourcée.

8. Procédé selon l'une des revendications 1 à 7, **caractérisé en ce que** ledit composant b1) est choisi parmi : l'isosorbide (1,4:3,6 dianhydro-D-sorbitol), l'isomannide (1,4:3,6 dianhydro-D-mannitol) ou l'isoidide (1,4:3,6 dianhydro-L-iditol).

9. Procédé selon l'une des revendications 1 à 8, **caractérisé en ce qu'**au moins 50 %, de préférence au moins 75 % en poids par rapport au poids global desdits composants a) + b) est biosourcé.

10. Procédé selon l'une des revendications 1 à 9, **caractérisé en ce que** les composants a) et b) sont à 100 % biosourcés.

11. Procédé selon l'une des revendications 1 à 10, **caractérisé en ce que** ledit polyol b2) est biosourcé et choisi parmi : le 1,3 propylène diol ou le 1,2 propylène diol ou le 1,4 butane diol ou les diols à base d'acides gras saturés.

12. Procédé selon l'une des revendications 1 à 11, **caractérisé en ce que** ledit polyol b3) est biosourcé et choisi parmi le glycérol et ses dérivés éther-polyols, tels que les polyglycérols.

13. Procédé selon l'une des revendications 1 à 3, **caractérisé en ce que** ledit polyacide a1) est un diacide aliphatique biosourcé choisi parmi : acide succinique, acide tartrique, acide citrique, acide malique, acide itaconique, acide glutarique, acide glutamique, acide fumarique, acide furanne dicarboxylique, acide tetrahydrofuranne 2,5 dicarboxylique ou acide tetrahydrofuranne 3,5 dicarboxylique, de préférence acide succinique, acide itaconique, acide glutamique, acide fumarique, acide furane dicarboxylique ou acide tetrahydrofuranne 2,5 dicarboxylique ou acide tetrahydrofuranne 3,5 dicarboxylique.

14. Procédé selon l'une des revendications 1 à 13, **caractérisé en ce que** ledit polyacide a2) est biosourcé et choisi parmi : l'acide azélaïque ($C_9$), acide sébacique ($C_{10}$), acide undécane dioïque, acide dodécane dioïque ou dimères et trimères d'acides gras respectivement en $C_{36}$ et $C_{54}$.

15. Procédé selon l'une des revendications 1 à 14, **caractérisé en ce que** ledit monoacide a3) est sélectionné parmi : acide acétique, pyruvique, lactique ou la colophane (acide abiétique et isomères en $C_{20}$) ou un acide gras saturé en $C_{12}$ à $C_{22}$.

16. Procédé selon l'une des revendications 1 à 15, **caractérisé en ce que** ledit polyol b1) représente au moins 40 % mol/mol par rapport au composant b).

17. Procédé selon l'une des revendications 1 à 16, **caractérisé en ce que**, lors de la première étape i), le rapport molaire des groupements carboxy dudit composant a) par rapport aux groupements OH dudit polyol b1) varie de 1,1 à 2,1 et de préférence de 1,2 à 2, plus préférentiellement de 1,3 à 1,9.

**Patentansprüche**

1. Verfahren zur Herstellung eines hydroxylierten oder carboxylierten, gegebenenfalls hydroxylierten und carboxylierten, linearen oder verzweigten Polyesterharzes, das frei von ungesättigter Fettsäure ist, wobei das Verfahren **dadurch gekennzeichnet ist, dass** es die Umsetzung zwischen einer Säurekomponente a) und einer Alkoholkomponente b) umfasst, wobei die Säurekomponente a)

   a1) mindestens eine $C_4$- bis $C_6$-Polycarbonsäure oder ein Anhydrid davon, vorzugsweise mit einer Funktionalität $f_{a1}$ im Bereich von 2 bis 4 und weiter bevorzugt gleich 2,
   a2) mindestens eine $C_8$- bis $C_{54}$-Polycarbonsäure oder ein Anhydrid davon, vorzugsweise mit einer Funktionalität $f_{a2}$ im Bereich von 2 bis 4 und weiter bevorzugt gleich 2, und
   a3) gegebenenfalls mindestens eine gesättigte $C_2$-bis $C_{22}$-Monosäure

   umfasst und
   wobei die Alkoholkomponente b)

   b1) mindestens ein biobasiertes Polyol mit einer Funktionalität $f_{b1}$ von mindestens 2, vorzugsweise 2, das eine 1,4:3,6-Dianhydrohexitol-Einheit trägt,

   und mindestens eines der zwei folgenden Polyole b2) oder b3):

   b2) mindestens ein von b1) verschiedenes Polyol mit einer Funktionalität $f_{b2}$ von mindestens 2, vorzugsweise 2, insbesondere mit 3 bis 36 C-Atomen,
   b3) mindestens ein von b1) und von b2) verschiedenes Polyol mit einer Funktionalität $f_{b3}$ von mindestens 3, vorzugsweise 3, umfasst,

   wobei die Umsetzung gemäß den folgenden aufeinanderfolgenden Schritten erfolgt:

   i) Umsetzung der gesamten Säurekomponente a) mit der Komponente b1) der Alkoholkomponente b) bis zu einem Umsatz von mindestens 85 %, vorzugsweise 100 %, der Komponente b1), und dann
   ii) Umsetzung des Produkts aus Schritt i) mit dem Rest der Alkoholkomponente b), die mindestens eines der Polyole b2) oder b3) umfasst,

   wobei die Umsetzungen der Schritte i) und ii) in Lösung in mindestens einem organischen Lösungsmittel, das ein Azeotrop mit Wasser bilden kann, erfolgen.

2. Verfahren nach Anspruch 1, **dadurch gekennzeichnet, dass** der Schritt i) in Gegenwart eines Katalysators, der aus

   - Zinnderivaten, insbesondere Zinnoxalat, Butylzinnsäure oder Zinn(II)-oxid,
   - Titanderivaten, insbesondere Alkyltitanaten, wie Ethyltitanat, Isopropyltitanat, Butyltitanat oder 2-Ethylhexyltitanat und spezieller Isopropyltitanat oder Butyltitanat, ausgewählt wird, durchgeführt wird.

3. Verfahren nach Anspruch 2, **dadurch gekennzeichnet, dass** die Gewichtsmenge des Katalysators, bezogen auf alle Reaktanten von Schritt i) (a) + b1)) im Bereich von 0,01 bis 0,5 % liegt.

4. Verfahren nach einem der Ansprüche 1 bis 3, **dadurch gekennzeichnet, dass** der Schritt i) bei einer Temperatur im Bereich von 150 bis 220 °C durchgeführt wird.

5. Verfahren nach einem der Ansprüche 1 bis 4, **dadurch gekennzeichnet, dass** der Schritt ii) bei einer Temperatur im Bereich von 180 bis 250 °C durchgeführt wird.

6. Verfahren nach einem der Ansprüche 1 bis 5, **dadurch gekennzeichnet, dass** das organische Lösungsmittel aus Ketonen, insbesondere Methylamylketon, Methylisobutylketon, 2-Heptanon, 2-Octanon und spezieller Methylamylketon, Methylisobutylketon oder 2-Heptanon, aromatischen Lösungsmitteln, insbesondere Xylol oder Toluol, cycloaliphatischen Lösungsmitteln, insbesondere Cyclohexan, oder Alkanen mit mindestens 7 C-Atomen und vorzugsweise Ketonen, insbesondere Methylamylketon, Methylisobutylketon, ausgewählt wird.

7. Verfahren nach einem der Ansprüche 1 bis 6, **dadurch gekennzeichnet, dass** ein Gewichtsanteil von mindestens 50 %, vorzugsweise mindestens 75 %, des Polyols b) biobasiert ist.

8. Verfahren nach einem der Ansprüche 1 bis 7, **dadurch gekennzeichnet, dass** die Komponente b1) aus Isosorbid (1,4:3,6-Dianhydro-D-sorbitol), Isomannid (1,4:3,6-Dianhydro-D-mannitol) oder Isoidid (1,4:3,6-Dianhydro-L-iditol) ausgewählt wird.

9. Verfahren nach einem der Ansprüche 1 bis 8, **dadurch gekennzeichnet, dass** mindestens 50 Gew.-%, vorzugsweise mindestens 75 Gew.-%, bezogen auf das Gesamtgewicht der Komponenten a) + b), biobasiert sind.

10. Verfahren nach einem der Ansprüche 1 bis 9, **dadurch gekennzeichnet, dass** die Komponenten a) und b) zu 100% biobasiert sind.

11. Verfahren nach einem der Ansprüche 1 bis 10, **dadurch gekennzeichnet, dass** das Polyol b2) biobasiert ist und aus 1,3-Propylendiol oder 1,2-Propylendiol oder 1,4-Butandiol oder Diolen auf Basis von gesättigten Fettsäuren ausgewählt wird.

12. Verfahren nach einem der Ansprüche 1 bis 11, **dadurch gekennzeichnet, dass** das Polyol b3) biobasiert ist und aus Glycerin und Etherpolyolderivaten davon, wie Polyglycerinen, ausgewählt wird.

13. Verfahren nach einem der Ansprüche 1 bis 3, **dadurch gekennzeichnet, dass** es sich bei der Polysäure a1) um eine biobasierte aliphatische Disäure, die aus Bernsteinsäure, Weinsäure, Citronensäure, Äpfelsäure, Itaconsäure, Glutarsäure, Glutaminsäure, Fumarsäure, Furandicarbonsäure, Tetrahydrofuran-2,5-dicarbonsäure oder Tetrahydrofuran-3,5-dicarbonsäure, vorzugsweise Bernsteinsäure, Itaconsäure, Glutaminsäure, Fumarsäure, Furandicarbonsäure oder Tetrahydrofuran-2,5-dicarbonsäure oder Tetrahydrofuran-3,5-dicarbonsäure, ausgewählt ist, handelt.

14. Verfahren nach einem der Ansprüche 1 bis 13, **dadurch gekennzeichnet, dass** die Polysäure a2) biobasiert ist und aus Azelainsäure ($C_9$), Sebacinsäure ($C_{10}$), Undecandisäure, Dodecandisäure oder $C_{36}$- bzw. $C_{54}$-Fettsäuredimeren oder -Trimeren ausgewählt wird.

15. Verfahren nach einem der Ansprüche 1 bis 14, **dadurch gekennzeichnet, dass** die Monosäure a3) aus Essigsäure, Brenztraubensäure, Milchsäure oder Kolophonium (Abietinsäure und $C_2$-Isomere) oder einer gesättigten $C_{12}$- bis $C_{22}$-Fettsäure ausgewählt wird.

16. Verfahren nach einem der Ansprüche 1 bis 15, **dadurch gekennzeichnet dass** das Polyol b1) mindestens 40 mol/mol-%, bezogen auf die Komponente b), ausmacht.

17. Verfahren nach einem der Ansprüche 1 bis 16, **dadurch gekennzeichnet, dass** im ersten Schritt i) das Molverhältnis der Carboxygruppen der Komponente a) zu den OH-Gruppen des Polyols b1) im Bereich von 1,1 bis 2,1 vorzugsweise von 1,2 bis 2, weiter bevorzugt von 1,3 bis 1,9, liegt.

**Claims**

1. Process for preparing a hydroxylated or carboxylated, optionally hydroxylated and carboxylated, linear or branched polyester resin free of unsaturated fatty acid, said process being **characterized in that** it comprises the reaction between an acid component a) and an alcohol component b), with said acid component a) comprising:

   a1) at least one $C_4$ to $C_6$ polycarboxylic acid or anhydride, preferably having a functionality $f_{a1}$ ranging from 2 to 4 and more preferentially equal to 2,
   a2) at least one $C_8$ to $C_{54}$ polycarboxylic acid or anhydride, preferably having a functionality $f_{a2}$ ranging from 2 to 4 and more preferentially equal to 2 and
   a3) optionally, at least one $C_2$ to $C_{22}$ saturated monoacid, and

   with said alcohol component b) comprising:

b1) at least one biobased polyol having a functionality $f_{b1}$ of at least 2, preferably 2, bearing a 1,4:3,6-dianhydrohexitol unit,

and at least one of the following two polyols b2) or b3):

b2) at least one polyol different than b1) having a functionality $f_{b2}$ of at least 2, preferably 2, which is more particularly $C_3$ to $C_{36}$,
b3) at least one polyol different than b1) and b2) having a functionality $f_{b3}$ of at least 3, preferably 3,

with said reaction being carried out according to the following successive steps:

i) reaction of all of the acid component a) with said component b1) of said alcohol component b) until a conversion of at least 85%, preferably 100% of said component b1) is obtained, followed by
ii) reaction of the product resulting from step i) with the rest of said alcohol component b), comprising at least one of said polyols b2) or b3),

the reactions of said steps i) and ii) taking place in solution in at least one organic solvent which can form an azeotrope with the water.

2. Process according to Claim 1, **characterized in that** said step i) is carried out in the presence of a catalyst chosen from:

- tin derivatives, in particular tin oxalate, butylstannoic acid or tin(II) oxide,
- titanium derivatives, in particular alkyl titanates, such as ethyl titanate, isopropyl titanate, butyl titanate or 2-ethylhexyl titanate and more particularly isopropyl titanate or butyl titanate.

3. Process according to Claim 2, **characterized in that** the amount by weight of said catalyst relative to the weight of all of the reactants of step i) (a)+ b1)) ranges from 0.01% to 0.5%.

4. Process according to one of Claims 1 to 3, **characterized in that** said step i) is carried out at a temperature ranging from 150 to 220°C.

5. Process according to one of Claims 1 to 4, **characterized in that** said step ii) is carried out at a temperature ranging from 180 to 250°C.

6. Process according to one of Claims 1 to 5, **characterized in that** said organic solvent is selected from: ketones, in particular methyl amyl ketone, methyl isobutyl ketone, 2-heptanone, 2-octanone and more particularly methyl amyl ketone, methyl isobutyl ketone or 2-heptanone, aromatic solvents, in particular xylene or toluene, cycloaliphatic solvents, in particular cyclohexane or alkanes which are at least $C_7$ alkanes and preferably ketones, in particular methyl amyl ketone and methyl isobutyl ketone.

7. Process according to one of Claims 1 to 6, **characterized in that** a fraction by weight of at least 50%, preferably of at least 75% of said polyol b) is biobased.

8. Process according to one of Claims 1 to 7, **characterized in that** said component b1) is chosen from: isosorbide (1,4:3,6-dianhydro-D-sorbitol), isomannide (1,4:3,6-dianhydro-D-mannitol) or isoidide (1,4:3,6-dianhydro-L-iditol).

9. Process according to one of Claims 1 to 8, **characterized in that** at least 50%, preferably at least 75%, by weight relative to the overall weight of said components a) + b) is biobased.

10. Process according to one of Claims 1 to 9, **characterized in that** the components a) and b) are 100% biobased.

11. Process according to one of Claims 1 to 10, **characterized in that** said polyol b2) is biobased and chosen from: 1,3-propylenediol or 1,2-propylenediol or 1,4-butanediol or diols based on saturated fatty acids.

12. Process according to one of Claims 1 to 11, **characterized in that** said polyol b3) is biobased and chosen from glycerol and ether-polyol derivatives thereof, such as polyglycerols.

**13.** Process according to one of Claims 1 to 3, **characterized in that** said polyacid a1) is a biobased aliphatic diacid chosen from: succinic acid, tartaric acid, citric acid, malic acid, itaconic acid, glutaric acid, glutamic acid, fumaric acid, furandicarboxylic acid, tetrahydrofuran-2,5-dicarboxylic acid or tetrahydrofuran-3,5-dicarboxylic acid, preferably succinic acid, itaconic acid, glutamic acid, fumaric acid, furandicarboxylic acid or tetrahydrofuran-2,5-dicarboxylic acid or tetrahydrofuran-3,5-dicarboxylic acid.

**14.** Process according to one of Claims 1 to 13, **characterized in that** said polyacid a2) is biobased and chosen from: azelaic acid ($C_9$), sebacic acid ($C_{10}$), undecanedioic acid, dodecanedioic acid or respectively $C_{36}$ and $C_{54}$ fatty acid dimers and trimers.

**15.** Process according to one of Claims 1 to 14, **characterized in that** said monoacid a3) is selected from: acetic acid, pyruvic acid, lactic acid or rosin (abietic acid and $C_{20}$ isomers) or a $C_{12}$ to $C_{22}$ saturated fatty acid.

**16.** Process according to one of Claims 1 to 15, **characterized in that** said polyol b1) represents at least 40 mol/mol% relative to the component b).

**17.** Process according to one of Claims 1 to 16, **characterized in that**, during the first step i), the molar ratio of the carboxy groups of said component a) relative to the OH groups of said polyol b1) ranges from 1.1 to 2.1 and preferably from 1.2 to 2, more preferentially from 1.3 to 1.9.

**RÉFÉRENCES CITÉES DANS LA DESCRIPTION**

**Documents brevets cités dans la description**

• WO 2012042153 A

**Littérature non-brevet citée dans la description**

• **B. A. NOORDOVER et al.** *J. Biomacromolecules,* 2006, vol. 7, 3406-3416

• *Macromolecules,* 1976, vol. 9, 199-211